# EUROPEAN PATENT SPECIFICATION

(11) **EP 2 578 833 B1**
(45) Date of publication and mention of the grant of the patent: **17.08.2016**
(21) Application number: 12187285.7
(22) Date of filing: 04.10.2012
(51) Int. Cl.: F01N 3/08, F01N 9/00, F01N 3/10, F01N 3/20, F01N 3/021

(54) **Exhaust Gas Purification Apparatus of an Internal Combustion Engine**
Abgasreinigungsvorrichtung einer Brennkraftmaschine
Dispositif de purification de gaz d'échappement d'un moteur à combustion interne

(30) Priority: 05.10.2011 JP 2011221340
(43) Date of publication of application: 10.04.2013
(73) Proprietor: Mitsubishi Jidosha Kogyo Kabushiki Kaisha, Tokyo 108-8410 (JP)
(72) Inventor: Kanayama Kuniki, Tokyo 108-8410 (JP); Hata Michihiro, Tokyo 108-8410 (JP); Koga Noriyuki, Tokyo 108-8410 (JP)
(74) Representative: Vossius & Partner Patentanwälte Rechtsanwälte mbB

(56) References cited:
- EP-A1- 2 196 647
- JP-A- 2004 360 575
- US-A1- 2006 070 373

## Description

### [Technical Field]

This invention relates to an exhaust purification apparatus of an engine. More specifically, the invention relates to a technology which supplies an additive to an exhaust path of an engine to regenerate an exhaust purification catalyst.

### [Background Art]

An exhaust gas discharged from an engine installed in an automobile or the like contains exhaust gas components, such as carbon monoxide (CO), hydrocarbons (HC), nitrogen oxides (NOₓ), and particulate matter (PM). An exhaust path of the engine, therefore, is provided with, for example, a three way catalyst for decomposing (for example, bringing to reduction) these substances, and a particulate filter for trapping PM.

In the case of an engine, suchas a diesel engine, whose air-fuel ratio is controlled to a lean air-fuel ratio side as compared with a stoichiometric air-fuel ratio to perform combustion in an oxidizing atmosphere, the three way catalyst cannot fully purify the nitrogen oxides (NOₓ) in the exhaust gas. Some exhaust paths of this type of engine, therefore, have a NOₓ storage catalyst, an exhaust purification catalyst, provided together with the three way catalyst. The NOₓ storage catalyst stores NOₓ contained in the exhaust when the air-fuel ratio of the exhaust is lean, but releases and reduces the stored NOₓ when the air-fuel ratio of the exhaust is rich. In the diesel engine or the like, the air-fuel ratio of the exhaust is normally lean, so that nitrogen oxides are stored in the NOₓ storage catalyst. Thus, there is need to carry out a regeneration process (NOₓ purge) in which a fuel (light oil) or the like, for example, is injected into the exhaust path with a predetermined timing to enrich the air-fuel ratio of the exhaust, thereby decomposing (reducing) the NOₓ stored in the NOₓ storage catalyst.

The fuel also contains a sulfur component as a noxious component. Thus, the sulfur component reacts with oxygen to turn into sulfur oxides (SOₓ), which are absorbed to the NOₓ storage catalyst instead of NOₓ (S poisoning) . It is necessary, therefore, to perform a regeneration process (S purge) for removing the sulfur oxides (SOₓ) with a predetermined timing. This regeneration process (S purge) requires that the air-fuel ratio of the exhaust be enriched as in the NOₓ purge, and the NOₓ storage catalyst be heated to a high temperature equal to or higher than a predetermined temperature.

Various proposals have been made for the regeneration process (Spurge). An example comprises controlling a fuel injection means, which injects a fuel (reducing agent), while maintaining the NOₓ storage catalyst in a rich atmosphere, to repeat, alternately, periods of frequent fuel addition and periods of infrequent fuel addition, thereby heating the NOₓ storage catalyst to a high temperature (see, for example, Patent Document 1).

### [Prior Art Documents]

### [Patent Documents]

[Patent Document 1] Japanese Patent No. 3972864

Document EP 2 196 647 A discloses an exhaust gas purification apparatus according to the preamble of claim 1.

### [Summary of the Invention]

### [Problems to be solved by the invention]

By so repeating the periods of frequent fuel addition and the periods of infrequent fuel addition alternately during the S purge, it becomes possible to suppress the emission of HC and efficiently release SOₓ. If the temperature of the NOₓ storage catalyst falls during the S purge, however, the problem arises that the amounts of sulfur oxides released decrease accordingly. That is, the efficiency of the S purge may decline.

When the temperature of the NOₓ storage catalyst falls, the amounts of emission of hydrocarbons (HC), etc. also increase. With the invention described in Patent Document 1, when the catalyst temperature is low, discharge of hydrocarbons (HC) is suppressed by increasing the proportion of the periods of infrequent fuel addition, but in accordance with this increase, the amount of removal of sulfur oxides is also decreased (see Fig. 3). That is, the invention described in Patent Document 1 also poses the problem that the efficiency of S purge lowers.

The present invention has been accomplished in the light of the above-mentioned situations. It is an object of this invention to provide an exhaust purification apparatus of an engine, which can release components of an exhaust efficiently by a regeneration process.

### [Means for solving the problems]

A first aspect of the present invention for solving the above problems is an exhaust purification apparatus of an engine, comprising: an exhaust purification catalyst provided in an exhaust path of an engine for purifying an exhaust; reducing agent supply means disposed upstream of the exhaust purification catalyst for injecting a hydrocarbon as a reducing agent into the exhaust path; temperature detection means for detecting a temperature of the exhaust purification catalyst; regeneration process execution means for performing a regeneration process which controls the reducing agent supply means to supply the reducing agent intermittently to the exhaust path so that an air-fuel ratio of the exhaust flowing out of the exhaust purification catalyst is kept rich, and renders the temperature of the exhaust purification catalyst equal to or higher than a set temperature to release exhaust components stored in the exhaust purification catalyst; and interval changing means for changing an interval between supplies of the reducing agent by the reducing agent supply means in accordance with a temperature difference between the temperature of the exhaust purification catalyst detected by the temperature detection means and the set temperature.

A second aspect of the present invention is the exhaust purification apparatus of an engine according to the first aspect, characterized in that the interval changing means makes the interval between supplies shorter as the temperature difference becomes greater when the temperature of the exhaust purification catalyst is higher than the set temperature.

A third aspect of the present invention is the exhaust purification apparatus of an engine according to the first or second aspect, characterized in that the interval changing means makes the interval between supplies longer as the temperature difference becomes greater when the temperature of the exhaust purification catalyst is lower than the set temperature.

A fourth aspect of the present invention is the exhaust purification apparatus of an engine according to any one of the first to third aspects, characterized in that the regeneration process execution means implements, as the regeneration process, rich continuation periods and long lean periods alternately and repeatedly, the rich continuation periods being periods during which the reducing agent is intermittently supplied to the exhaust path so that an air-fuel ratio of the exhaust is kept rich, and the long lean periods being periods during which supply of the reducing agent to the exhaust path is stopped so that the air-fuel ratio of the exhaust becomes lean.

A fifth aspect of the present invention is the exhaust purification apparatus of an engine according to the fourth aspect, characterized in that the regeneration process execution means performs the regeneration process in accordance with setting of a short lean period during which an interval between injections of the reducing agent by the reducing agent supply means at start of the rich continuation period of the regeneration process is shorter than a duration of injection of the reducing agent.

A sixth aspect of the present invention is the exhaust purification apparatus of an engine according to the fifth aspect, characterized in that the regeneration process execution means terminates the short lean period when the air-fuel ratio of the exhaust becomes richer than a predetermined air-fuel ratio, which has been set beforehand, within the rich continuation period of the regeneration process.

A seventh aspect of the present invention is the exhaust purification apparatus of an engine according to the sixth aspect, characterized in that the regeneration process execution means exercises feed forward control of the reducing agent supply means during the short lean period and, when the air-fuel ratio of the exhaust becomes richer than the predetermined air-fuel ratio and stable, exercises feedback control of the reducing agent supply means so as to bring the air-fuel ratio of the exhaust close to a target air-fuel ratio.

An eighth aspect of the present invention is the exhaust purification apparatus of an engine according to the seventh aspect, characterized in that the target air-fuel ratio of the exhaust is set based on a maximum value of the air-fuel ratio of the exhaust which varies upon intermittent supply of the reducing agent by the reducing agent supply means.

### [Effects of the Invention]

According to the present invention described above, a fall in the temperature of the exhaust purification catalyst is suppressed during the execution of the regeneration process. Hence, nitrogen oxides (NOₓ) and sulfur oxides (SOₓ), for example, can be discharged efficiently from the exhaust purification catalyst by the regeneration process.

### [Brief Description of the Drawings]

[Fig. 1] is a schematic configurational drawing showing an engine including an exhaust purification apparatus according to an embodiment of the present invention.
[Fig. 2] is a graph showing changes in the catalyst air-fuel ratio and the interval between fuel injections into an exhaust pipe during S purge.
[Fig. 3] is a graph showing changes in the catalyst temperature, the target air-fuel ratio, and the lean time during S purge.
[Fig. 4] is a flow chart showing an example of control during S purge by the exhaust purification apparatus according to the embodiment of the present invention.

### [Mode for Carrying Out the Invention]

The embodiment of the present invention will now be described in detail with reference to the accompanying drawings.

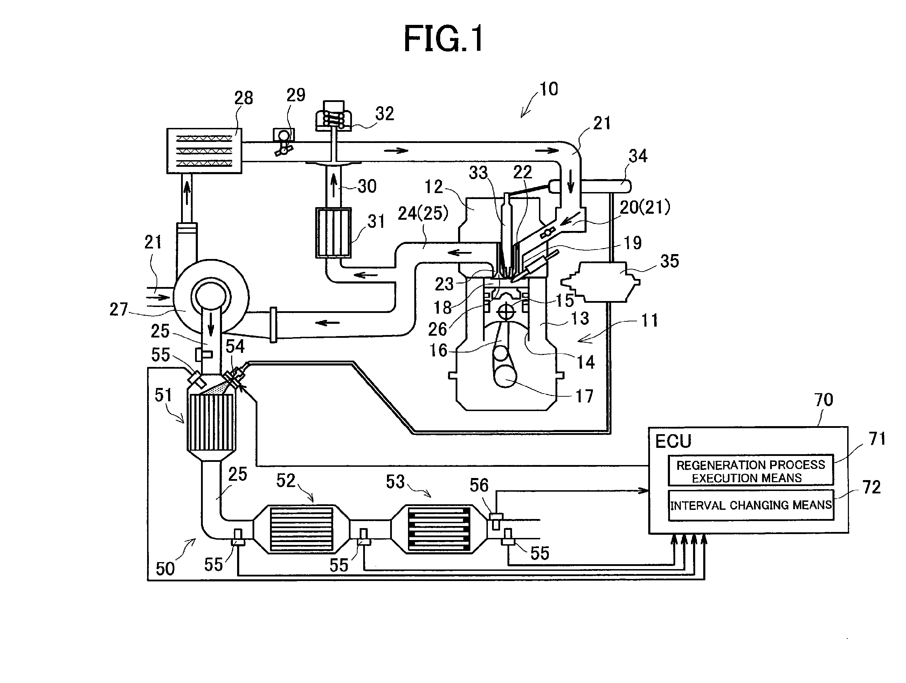

The overall configuration of an engine 10 including an exhaust purification apparatus according to the embodiment of the present invention will be described first. The engine 10 shown in Fig. 1 is a diesel engine, in which an engine body 11 includes a cylinder head 12 and a cylinder block 13, and a piston 15 is accommodated within each cylinder bore 14 of the cylinder block 13. The piston 15 is connected to a crankshaft 17 via a connecting rod 16. The piston 15 , the cylinder bore 14 , and the cylinder head 12 constitute a combustion chamber 18.

An intake port 19 is formed in the cylinder head 12, and an intake pipe (intake path) 21 including an intake manifold 20 is connected to the intake port 19. An intake valve 22 is provided within the intake port 19, and the intake port 19 is opened and closed by the intake valve 22. An exhaust port 23 is formed in the cylinder head 12 , and an exhaust pipe (exhaust path) 25 including an exhaust manifold 24 is connected to the interior of the exhaust port 23. The exhaust port 23 is provided with an exhaust valve 26 and, like the intake port 19, the exhaust port 23 is opened and closed by the exhaust valve 26.

A turbocharger 27 is provided halfway through the intake pipe 21 and the exhaust pipe 25. An intercooler 28 is disposed in the intake pipe 21 downstream of the turbocharger 27. A throttle valve 29 for opening and closing the intake pipe (intake path) 21 is provided in the intake pipe 21 downstream of the intercooler 28. An EGR pipe (EGR path) 30 communicating with the exhaust pipe 25 upstream of the turbocharger 27 is connected to the intake pipe 21 downstream of the throttle valve 29. An EGR cooler 31 is provided in the EGR pipe 30, and an EGR valve 32 is provided in a junction of the EGR pipe with the intake pipe 21.

The cylinder head 12 is provided with a fuel injection valve 33 for injecting a fuel into the combustion chamber 18 of each cylinder. The fuel injection valve 33 is supplied with a fuel from a common-rail 34. The common-rail 34 is supplied with a fuel in a fuel tank (not shown) by a supply pump 35, and the fuel is supplied at a predetermined pressure from the supply pump 35 to the common-rail 34 in accordance with the rotational speed of the engine body 11. In the common-rail 34, the fuel is adjusted to a predetermined fuel pressure, and a high pressure fuel controlled to the predetermined fuel pressure is supplied from the common-rail 34 to the fuel injection valve 33.

In the exhaust pipe 25 downstream of the turbocharger 27, a diesel oxidation catalyst (will hereinafter be referred to simply as an oxidation catalyst) 51, a NOₓ storage catalyst 52 as an exhaust purification catalyst, and a diesel particulate filter (DPF; will hereinafter be referred to as DPF) 53, which constitute an exhaust purification apparatus 50 according to the present embodiment, are arranged in this order, starting on an upstream side. An injector 54, which is a reducing agent supply means for injecting a hydrocarbon (e.g. , fuel), as a reducing agent, into the exhaust pipe 25 is provided near an entrance to the oxidation catalyst 51.

Exhaust temperature sensors 55 are provided near the entrances of the oxidation catalyst 51, the NOₓ storage catalyst 52 and the DPF 53 and near an exit from the DPF 53. Furthermore, an air-fuel ratio sensor 56 for detecting the air-fuel ratio of an exhaust gas is provided near the exit of the DPF 53. In the present embodiment, as will be described later, the air-fuel ratio of the exhaust flowing out of the NOₓ storage catalyst 52 (hereinafter will also be referred to as "catalyst air-fuel ratio") is detected by this air-fuel ratio sensor 56. The air-fuel ratio sensor 56 may be one which detects the oxygen concentration in the exhaust gas.

The oxidation catalyst 51 comprises, for example, a precious metal, such as platinum (Pt) or palladium (Pd), carried on a carrier of a honeycomb structure formed from a ceramic material. When the exhaust gas flows into the oxidation catalyst 51, nitrogen monoxide (NO) in the exhaust gas is oxidized to formnitrogen dioxide (NO₂).

The NOₓ storage catalyst 52 comprises, for example, a precious metal, such as platinum (Pt) or palladium (Pd), carried on a carrier of a honeycomb structure formed from a ceramic material, and also has an alkali metal or an alkaline earth metal, such as barium (Ba), carried as a storage agent on the carrier. In the NOₓ storage catalyst 52, NOₓ, which is an exhaust component, is once stored in an oxidizing atmosphere, and the NOₓ is released in a reducing atmosphere containing, for example, carbon monoxide (CO), hydrocarbons (HC), etc. , and is thereby reduced to nitrogen (N₂) or the like. Normally, in the NOₓ storage catalyst 52, NOₓ is only adsorbed, and the adsorbed NOₓ is not decomposed (reduced). When a predetermined amount of NOₓ is adsorbed to the NOₓ storage catalyst 52, the fuel (light oil) as a reducing agent is injected from the injector 54. As a result, the exhaust gas mixed with the fuel is passed through the oxidation catalyst 51 and supplied to the NOₓ storage catalyst 52. Consequently, the interior of the NOₓ storage catalyst 52 is brought to a reducing atmosphere, and the stored NOₓ is decomposed (reduced) (NOₓ purge).

Moreover, the NOₓ storage catalyst 52 stores sulfur oxides (SOₓ), which are an exhaust component, as well as nitrogen oxides (NOₓ). As with NOₓ purge, the fuel (light oil) as a reducing agent is injected from the injector 54 with a predetermined timing, and the NOₓ storage catalyst 52 is heated to a high temperature equal to or higher than a predetermined temperature, whereby the stored sulfur oxides (SOₓ) are decomposed (reduced) (S purge).

The DPF 53 is, for example, a filter of a honeycomb structure formed from a ceramic material. PM trapped by the DPF 53 is oxidized (burned) by NO₂ contained in the exhaust gas, and is discharged as CO₂. NO₂ remaining within the DPF 53 is decomposed into N₂, and discharged.

The engine 10 is equipped with an electronic control unit (ECU) 70, and the ECU 70 is furnished with an input-output device, a storage device for storing a control program, a control map, etc. , a central processing unit, and timers and counters. Based on information from each of the sensors, the ECU 70 exercises integrated control over the engine 10 loaded with the exhaust purification apparatus 50.

The ECU 70 concurrently functions as a part of the exhaust purification apparatus 50, and controls the injector 54, as appropriate, based on information from the various sensors such as the exhaust temperature sensors 55 and the air-fuel ratio sensor 56. For example, the ECU 70 has a regeneration process execution means 71, and this regeneration process execution means 71 carries out the aforementioned regeneration process for the NOₓ storage catalyst 52 (S purge). With the S purge, the injector 54 is controlled to supply fuel intermittently into the exhaust pipe 25 with predetermined timings, thereby enriching the air-fuel ratio of the exhaust flowing out of the NOₓ storage catalyst 52 (catalyst air-fuel ratio). The catalyst air-fuel ratio is detected, for example, by the air-fuel ratio sensor 56 provided in the vicinity of the exit from the NOₓ storage catalyst 52. With the S purge, moreover, the catalyst air-fuel ratio is enriched, and the NOₓ storage catalyst 52 is heated to a high temperature equal to or higher than a set temperature. By so doing, the sulfur compounds (SOₓ), as the exhaust component stored in the NOₓ storage catalyst 52, can be discharged efficiently.

While the S purge is being carried out, however, the temperature of the NOₓ storage catalyst 52 (may hereinafter be referred to simply as "catalyst temperature") may change because of various factors. A fall in the catalyst temperature during the execution of the S purge may decrease the amount of discharge of sulfur oxides (SOₓ) from the NOₓ storage catalyst 52. That is, the regeneration efficiency of the NOₓ storage catalyst 52 by the S purge may become lower.

With the present invention, therefore, the catalyst temperature during S purge is maintained at as constant a temperature as possible, whereby a decrease in the amount of discharge of sulfur oxides (SOₓ) from the NOₓ storage catalyst 52 is curtailed, and the NOₓ storage catalyst 52 can be efficiently regenerated.

The regeneration process (S purge) for the exhaust purification catalyst (NOₓ storage catalyst) in the exhaust purification apparatus 50 of the present invention will be described in detail below.

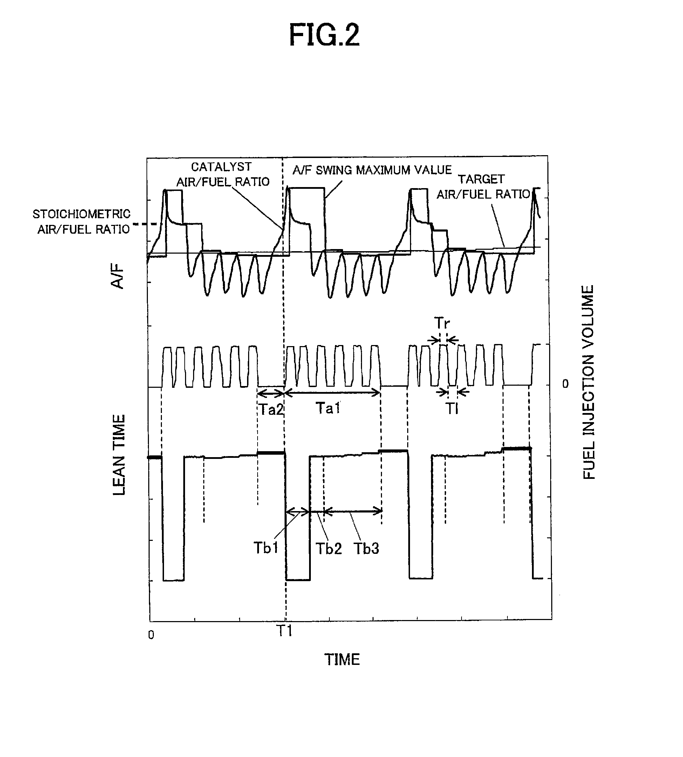

As shown in Fig. 2, rich continuation periods Ta1 and long lean periods Ta2 are implemented alternately and repeatedly during the regeneration process (S purge). During the rich continuation period Ta1, the fuel as a reducing agent is intermittently supplied to the exhaust pipe to keep rich the air-fuel ratio of the exhaust f lowing out of the NOₓ storage catalyst 52 (catalyst air-fuel ratio). During the long lean period Ta2, the supply of the fuel from the injector 54 to the exhaust path 25 is stopped to lean the catalyst air-fuel ratio.

At the starting point T1 of the rich continuation period Ta1, the catalyst air-fuel ratio is lean. Thus, the regeneration process execution means 71 implements a short lean F/F period Tb1 to enrich the catalyst fuel-air ratio at an early stage. Concretely, during the short lean F/F period Tb1, the injector 54 is subjected to F/F (feedforward) control, whereby the interval between injections of fuel by the injector 54, (i.e., lean time) Tl, is made shorter than the time during which fuel is injected, (i.e., rich time) Tr. That is, the R/L ratio, the ratio between the rich time Tr and the lean time Tl, is rendered lower than the initial value.

By this measure, the fuel supplied from the injector 54 to the exhaust pipe 25 per unit time is increased to achieve early enrichment of the catalyst air-fuel ratio. If the lean time Tl is eliminated to inject the fuel continuously, the catalyst air-fuel ratio can be enriched at an earlier stage. However, this poses a possibility that the catalyst air-fuel ratio will change too abruptly. Thus, even during the short lean F/F period Tb1, it is desirable that the fuel be supplied intermittently from the injector 54 into the exhaust pipe 25.

The short lean F/F period Tb1 ends when the catalyst air-fuel ratio becomes richer than a predetermined air-fuel ratio which has been set beforehand, for example, richer than a stoichiometric air-fuel ratio. At this stage, S purge shifts to an F/F period Tb2. Even during the F/F period Tb2, the injector 54 is F/F-controlled, and fuel is injected from the injector 54 based on the preset initial value. In the present embodiment, the lean time Tl and the rich time Tr are set to be the same time, as the initial value.

The F/F period Tb2 ends when the catalyst air-fuel ratio becomes stable on a richer side than the predetermined air-fuel ratio, for example, the stoichiometric air-fuel ratio. At this stage, S purge shifts to an F/B (feedback) period Tb3. In the present embodiment, for example, after a predetermined time has elapsed since the shift to the F/F period Tb2, S purge shifts from the F/F period Tb2 to the F/B period Tb3. During the F/B period Tb3, the injector 54 is F/B-controlled based on the catalyst air-fuel ratio. In the present embodiment, the injector 54 is F/B-controlled based on a swing maximum value (A/F swing maximum value).

The A/F swing maximum value refers to a maximum value of the catalyst air-fuel ratio varying upon the intermittent injection of the fuel by the injector 54. The target air-fuel ratio of F/B control during the F/B period Tb3 has been set beforehand as the target value of the A/F swing maximum value. During the F/B period Tb3, the injector 54 is F/B-controlled such that the A/F swing maximum value approaches the target air-fuel ratio. That is, appropriate control is effected such that the length of the lean time Tl is changed, whereby the A/F swing maximum value approaches the target air-fuel ratio.

In the present invention, moreover, the injector 54 is F/B-controlled based on the temperature of the NOₓ storage catalyst 52 (catalyst temperature) so that the temperature of the NOₓ storage catalyst 52 will be maintained at as constant a temperature as possible. That is, an interval changing means 72 of the ECU 70 controls, as appropriate, the interval between supplies of fuel, (lean time) Tl, by the injector 54 in response to the temperature of the NOₓ storage catalyst 52. In the present embodiment, the temperature of the NOₓ storage catalyst 52 is found based on the results of detection by the exhaust temperature sensor 55 provided near the exit of the NOₓ storage catalyst 52.

The interval changing means 72, concretely, changes the interval between supplies of fuel, (lean time) Tl, by the injector 54 in accordance with a temperature difference Te3 between the temperature of the NOₓ storage catalyst 52, (catalyst temperature) Te1, based on the results of detection by the exhaust temperature sensor 55 and a set temperature Te2 which has been set beforehand. The set temperature Te2 is set, for example, at a value in the vicinity of the minimum temperature of the NOₓ storage catalyst 52 necessary for S purge.

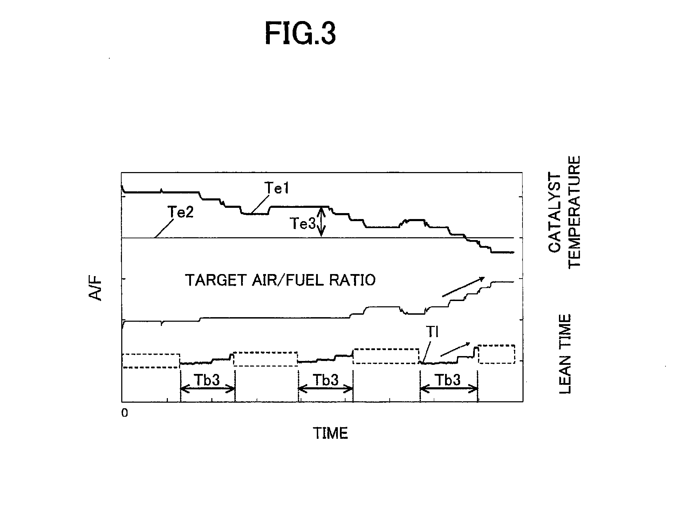

As shown in Fig. 3, for example, in a state where the catalyst temperature Te1 is higher than the set temperature Te2, the interval changing means 72 shortens the lean time Tl as the temperature difference Te3 between the catalyst temperature Te1 and the set temperature Te2 increases. In a state where the catalyst temperature Te1 is lower than the set temperature Te2 , on the other hand, the greater the temperature difference Te3, the longer the lean time Tl is made. In other words, the lower the catalyst temperature Te1, the longer the lean time Tl becomes. By so doing, the catalyst temperature Te1 can be raised or lowered, so that the catalyst temperature Te1 becomes easier to maintain at a constant temperature.

The present invention is a novel invention established on the new finding that when the air-fuel ratio of the NOₓ storage catalyst 52 (catalyst air-fuel ratio) is rich during S purge, the catalyst air-fuel ratio is shifted to the lean side, whereby the catalyst temperature Te1 rises.

In the present embodiment, during the F/B period Tb3, the injector 54 is controlled to bring the A/F swing maximum value close to the target air-fuel ratio, as stated above. Thus, the interval changing means 72 changes the target air-fuel ratio depending on the catalyst temperature Te1, thereby eventually changing the lean time Tl. That is, the interval changing means 72 changes the target air-fuel ratio to a leaner side as the temperature of the NOₓ storage catalyst 52 becomes lower. According to this change, the regeneration process execution means 71 F/B-controls the lean time Tl in such a manner that the A/F swing maximum value approaches the changed target air-fuel ratio. As a result, the lean time Tl lengthens to raise the temperature Te1 of the NOₓ storage catalyst 52.

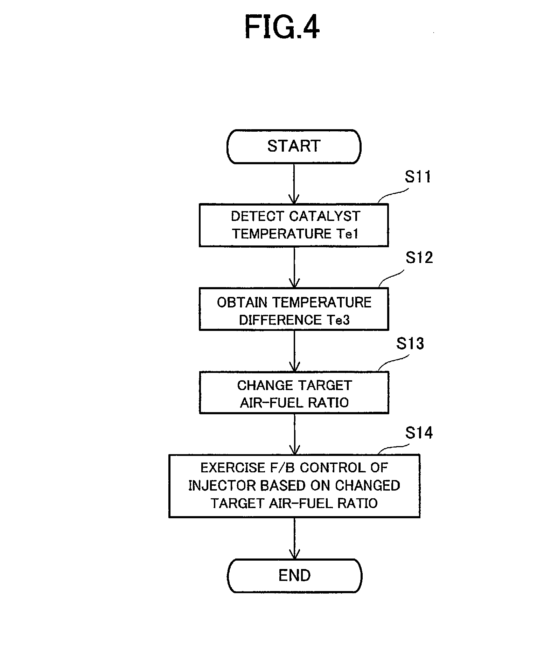

An example of F/B control over the injector 54 based on the catalyst temperature will be described further by reference to the flow chart of Fig. 4.

As shown in Fig. 4, the temperature Te1 of the NOₓ storage catalyst 52 based on the results of detection by the exhaust temperature sensor 55 is determined in step S11. Then, in step S12, the temperature difference Te3 between the catalyst temperature Te1 and the set temperature Te2 is obtained. In step S13, the interval changing means 72 changes the target air-fuel ratio to a value suitable for the temperature difference Te3, for example, by reference to a prestored map or the like. If it is desired to raise the catalyst temperature Te1, for example, the target air-fuel ratio is changed to a lean side. After the target air-fuel ratio is changed, the regenerationprocess execution means 71 F/B-controls the injector 54 based on the changed target air-fuel ratio (step S14). That is, the interval between injections of fuel, (leantime) Tl, by the injectors 54 is changed, as appropriate, so that the A/F swing maximum value approaches the changed target air-fuel ratio.

With the present invention, as described above, the interval between injections of fuel, (lean time) Tl, by the injectors 54 is changed in accordance with the catalyst temperature Te1. Thus, it becomes easy to maintain the temperature of the NOₓ storage catalyst 52 at a constant temperature, without changing the air-fuel ratio of the NOₓ storage catalyst 52 beyond a required range.

The present invention has been described in regard to its embodiment, but it is to be noted that the present invention is in way limited to this embodiment. In the foregoing embodiment, for example, an explanation has been offered for an example in which the interval between supplies of fuel, (lean time), by the injector is changed. However, the present invention is not limited to this example, either. In the present invention, the lean time is changed, with the result that the R/L ratio is changed, as mentioned above. Hence, it is permissible to change the lean time relatively, by changing the rich time.

In the above-described embodiment, moreover, S purge is exemplified as a regeneration process, but the present invention is not limited to this embodiment. For example, the present invention can be applied in performing NOₓ purge. Furthermore, fuel is used as a reducing agent in the above embodiment, but it goes without saying that any other material than fuel may be used, as long as it is a hydrocarbon.

In the above embodiment, additionally, the diesel engine is taken as an example for illustration, but needless to say, the present invention can be applied to other engines.

### [Explanations of Letters or Numerals]

- 10: Engine
- 11: Engine body
- 12: Cylinder head
- 13: Cylinder block
- 14: Cylinder bore
- 15: Piston
- 16: Connecting rod
- 17: Crankshaft
- 18: Combustion chamber
- 19: Intake port
- 20: Intake manifold
- 21: Intake pipe
- 22: Intake valve
- 23: Exhaust port
- 24: Exhaust manifold
- 25: Exhaust pipe (exhaust path)
- 26: Exhaust valve
- 27: Turbocharger
- 28: Intercooler
- 29: Throttle valve
- 30: EGR pipe
- 31: EGR cooler
- 32: EGR valve
- 33: Fuel injection valve
- 34: Common-rail
- 35: Supply pump
- 50: Exhaust purification apparatus
- 51: Oxidation catalyst
- 52: NOₓ storage catalyst
- 53: DPF
- 54: Injector
- 55: Exhaust temperature sensor
- 56: Air-fuel ratio sensor
- 71: Regeneration process execution means
- 72: Interval changing means

## Claims

1. An exhaust purification apparatus of an engine, comprising:
an exhaust purification catalyst (52) provided in an exhaust path (25) of an engine (10) for purifying an exhaust;
reducing agent supply means (54) disposed upstream of the exhaust purification catalyst for injecting a hydrocarbon as a reducing agent into the exhaust path;
temperature detection means (55) for detecting a temperature (Te1) of the exhaust purification catalyst (52);
**characterised by** regeneration process execution means (71) for performing a regeneration process which controls the reducing agent supply means to supply the reducing agent intermittently to the exhaust path so that an air-fuel ratio of the exhaust flowing out of the exhaust purification catalyst (52) is kept rich, and renders the temperature of the exhaust purification catalyst (52) equal to or higher than a set temperature (Te2) to release exhaust components stored in the exhaust purification catalyst (52); and interval changing means (72) for changing an interval (Tl) between supplies of the reducing agent by the reducing agent supply means (54) in accordance with a temperature difference (Te3) between the temperature (Te1) of the exhaust purification catalyst (52) detected by the temperature detection means (55) and the set temperature (Te2).

2. The exhaust purification apparatus of an engine according to claim 1, **characterized in that**
the interval changing means (72) makes the interval (T1) between supplies shorter as the temperature difference (Te3) becomes greater when the temperature (Te1) of the exhaust purification catalyst (52) is higher than the set temperature (Te2).

3. The exhaust purification apparatus of an engine according to claim 1 or 2, **characterized in that**
the interval changing means (72) makes the interval (T1) between supplies longer as the temperature difference (Te3) becomes greater when the temperature (Te1) of the exhaust purification catalyst (52) is lower than the set temperature (Te2).

4. The exhaust purification apparatus of an engine according to any one of claims 1 to 3, **characterized in that**
the regeneration process execution means (71) implements, as the regeneration process, rich continuation periods (Ta1) and long lean periods (Ta2) alternately and repeatedly, the rich continuation periods being periods during which the reducing agent is intermittently supplied to the exhaust path (25) so that the air-fuel ratio of the exhaust is kept rich, and the long lean periods being periods during which supply of the reducing agent to the exhaust path is stopped so that the air-fuel ratio of the exhaust becomes lean.

5. The exhaust purification apparatus of an engine according to claim 4, **characterized in that**
the regeneration process execution means (71) performs the regeneration process in accordance with setting of a short lean period (Tb1) during which an interval (Tl) between injections of the reducing agent by the reducing agent supply means (54) at start of the rich continuation period (Ta1) of the regeneration process is shorter than a duration (Tr) of injection of the reducing agent.

6. The exhaust purification apparatus of an engine according to claim 5, **characterized in that**
the regeneration process execution means (71) terminates the short lean period (Tb1) when the air-fuel ratio of the exhaust becomes richer than a predetermined air-fuel ratio, which has been set beforehand, within the rich continuation period (Ta1) of the regeneration process.

7. The exhaust purification apparatus of an engine according to claim 6, **characterized in that**
the regeneration process execution means (71) exercises feed forward control of the reducing agent supply means (54) during the short lean period (Tb1) and, when the air-fuel ratio of the exhaust becomes richer than the predetermined air-fuel ratio and stable, exercises feedback control of the reducing agent supply means so as to bring the air-fuel ratio of the exhaust close to a target air-fuel ratio.

8. The exhaust purification apparatus of an engine according to claim 7, **characterized in that**
the target air-fuel ratio of the exhaust is set based on a maximum value of the air-fuel ratio of the exhaust which varies upon intermittent supply of the reducing agent by the reducing agent supply means (54).

## Patentansprüche

1. Abgasreinigungsvorrichtung eines Motors, die aufweist:
einen in einem Abgasweg (25) eines Motors (10) vorgesehenen Abgasreinigungskatalysator (52) zum Reinigen eines Abgases;
eine stromaufwärts vom Abgasreinigungskatalysator angeordnete Reduktionsmittel-Zufuhreinrichtung (54) zum Einspritzen eines Kohlenwasserstoffs als Reduktionsmittel in den Abgasweg;
eine Temperaturdetektionseinrichtung (55) zum Detektieren einer Temperatur (Te1) des Abgasreinigungskatalysators (52);
**gekennzeichnet durch** eine Regenerationsverfahren-Durchführungseinrichtung (71) zum Durchführen eines Regenerationsverfahrens, die die Reduktionsmittel-Zufuhreinrichtung regelt, um das Reduktionsmittel dem Abgasweg intermittierend zuzuführten, so dass ein Luft-Kraftstoff-Verhältnis des aus dem Abgasreinigungskatalysator (52) ausströmenden Abgases fett gehalten wird, und die Temperatur des Abgasreinigungskatalysators (52) mindestens gleich einer Einstelltemperatur (Te2) macht, um im Abgasreinigungskatalysator (52) gespeicherte Abgaskomponenten freizusetzen; und eine Intervalländerungseinrichtung (72) zum Ändern eines Intervalls (T1) zwischen Zufuhrvorgängen des Reduktionsmittels **durch** die Reduktionsmittel-Zufuhreinrichtung (54) in Übereinstimmung mit einer Temperaturdifferenz (Te3) zwischen der Temperatur (Te1) des Abgasreinigungskatalysators (52), die **durch** die Temperaturdetektionseinrichtung (55) detektiert wird, und der Einstelltemperatur (Te2).

2. Abgasreinigungsvorrichtung eines Motors nach Anspruch 1, **dadurch gekennzeichnet, dass**
die Intervalländerungseinrichtung (72) das Intervall (T1) zwischen Zufuhrvorgängen mit größerer Temperaturdifferenz (Te3) verkürzt, wenn die Temperatur (Te1) des Abgasreinigungskatalysators (52) höher als die Einstelltemperatur (Te2) ist.

3. Abgasreinigungsvorrichtung eines Motors nach Anspruch 1 oder 2, **dadurch gekennzeichnet, dass**
die Intervalländerungseinrichtung (72) das Intervall (T1) zwischen Zufuhrvorgängen mit größerer Temperaturdifferenz (Te3) verlängert, wenn die Temperatur (Te1) des Abgasreinigungskatalysators (52) niedriger als die Einstelltemperatur (Te2) ist.

4. Abgasreinigungsvorrichtung eines Motors nach einem der Ansprüche 1 bis 3, **dadurch gekennzeichnet, dass**
die Regenerationsverfahren-Durchführungseinrichtung (71) als Regenerationsverfahren fette Fortsetzungsperioden (Ta1) und lange magere Perioden (Ta2) abwechselnd und wiederholt realisiert, wobei die fetten Fortsetzungsperioden Perioden sind, in denen das Reduktionsmittel dem Abgasweg (25) intermittierend zugeführt wird, so dass das Luft-Kraftstoff-Verhältnis des Abgases fett gehalten wird, und die langen mageren Perioden Perioden sind, in denen die Zufuhr des Reduktionsmittels zum Abgasweg gestoppt ist, so dass das Luft-Kraftstoff-Verhältnis des Abgases mager wird.

5. Abgasreinigungsvorrichtung eines Motors nach Anspruch 4, **dadurch gekennzeichnet, dass**
die Regenerationsverfahren-Durchführungseinrichtung (71) das Regenerationsverfahren in Übereinstimmung mit einer Einstellung einer kurzen mageren Periode (Tb1) durchführt, in der ein Intervall (T1) zwischen Einspritzvorgängen des Reduktionsmittels durch die Reduktionsmittel-Zufuhreinrichtung (54) zu Beginn der fetten Fortsetzungsperiode (Ta1) des Regenerationsverfahrens kürzer als eine Dauer (Tr) der Einspritzung des Reduktionsmittels ist.

6. Abgasreinigungsvorrichtung eines Motors nach Anspruch 5, **dadurch gekennzeichnet, dass**
die Regenerationsverfahren-Durchführungseinrichtung (71) die kurze magere Periode (Tb1) beendet, wenn das Luft-Kraftstoff-Verhältnis des Abgases fetter als ein vorbestimmtes Luft-Kraftstoff-Verhältnis, das vorab eingestellt wurde, in der fetten Fortsetzungsperiode (Ta1) des Regenerationsverfahrens wird.

7. Abgasreinigungsvorrichtung eines Motors nach Anspruch 6, **dadurch gekennzeichnet, dass**
die Regenerationsverfahren-Durchführungseinrichtung (71) eine Vorwärtsregelung der Reduktionsmittel-Zufuhreinrichtung (54) in der kurzen mageren Periode (Tb1) ausübt und, wenn das Luft-Kraftstoff-Verhältnis des Abgases fetter als das vorbestimmte Luft-Kraftstoff-Verhältnis und stabil wird, eine Rückführregelung der Reduktionsmittel-Zufuhreinrichtung ausübt, um das Luft-Kraftstoff-Verhältnis des Abgases an ein Soll-Luft-Kraftstoff-Verhältnis heranzuführen.

8. Abgasreinigungsvorrichtung eines Motors nach Anspruch 7, **dadurch gekennzeichnet, dass**
das Soll-Luft-Kraftstoff-Verhältnis des Abgases auf der Grundlage eines Maximalwerts des Luft-Kraftstoff-Verhältnisses des Abgases eingestellt wird, der bei intermittierender Zufuhr des Reduktionsmittels durch die Reduktionsmittel-Zufuhreinrichtung (54) variiert.

## Revendications

1. Appareil de purification d'échappement d'un moteur, comprenant :
un catalyseur de purification d'échappement (52) prévu sur un trajet d'échappement (25) d'un moteur (10) afin de purifier un échappement ;
un moyen d'alimentation en agent réducteur (54) disposé en amont du catalyseur de purification d'échappement afin d'injecter un hydrocarbure en guise d'agent réducteur dans le trajet d'échappement ;
un moyen de détection de température (55) destiné à détecter une température (Te1) du catalyseur de purification d'échappement (52) ;
**caractérisé par** un moyen d'exécution de processus de régénération (71) destiné à effectuer un processus de régénération qui contrôle le moyen d'alimentation en agent réducteur afin de fournir l'agent réducteur par intermittence au trajet d'échappement de sorte qu'un rapport air/carburant de l'échappement qui sort du catalyseur de purification d'échappement (52) soit maintenu riche, et rend la température du catalyseur de purification d'échappement (52) égale ou supérieure à une température définie (Te2) afin de libérer les composants d'échappement stockés dans le catalyseur de purification d'échappement (52) ; et un moyen de changement d'intervalle (72) destiné à changer un intervalle (Tl) entre les alimentations en agent réducteur par le moyen d'alimentation en agent réducteur (54) selon une différence de température (Te3) entre la température (Te1) du catalyseur de purification d'échappement (52) détectée par le moyen de détection de température (55) et la température définie (Te2).

2. Appareil de purification d'échappement d'un moteur selon la revendication 1, **caractérisé en ce que**
le moyen de changement d'intervalle (72) diminue l'intervalle (T1) entre les alimentations lorsque la différence de température (Te3) devient plus élevée dès que la température (Te1) du catalyseur de purification d'échappement (52) est supérieure à la température définie (Te2).

3. Appareil de purification d'échappement d'un moteur selon la revendication 1 ou 2, **caractérisé en ce que**
le moyen de changement d'intervalle (72) augmente l'intervalle (Tl) entre les alimentations lorsque la différence de température (Te3) devient plus élevée dès que la température (Te1) du catalyseur de purification d'échappement (52) est inférieure à la température définie (Te2).

4. Appareil de purification d'échappement d'un moteur selon l'une quelconque des revendications 1 à 3, **caractérisé en ce que**
le moyen d'exécution de processus de régénération (71) met en ouvre, en guise de processus de régénération, des périodes continues de mélange riche (Ta1) et des périodes longues de mélange pauvre (Ta2) de manière alternée et répétée, les périodes continues de mélange riche étant des périodes pendant lesquelles l'agent réducteur est fourni par intermittence au trajet d'échappement (25) de sorte que le rapport air/carburant de l'échappement soit maintenu riche, et les périodes longues de mélange pauvre étant des périodes pendant lesquelles l'alimentation en agent réducteur du trajet d'échappement est arrêtée de sorte que le rapport air/carburant de l'échappement devienne pauvre.

5. Appareil de purification d'échappement d'un moteur selon la revendication 4, **caractérisé en ce que**
le moyen d'exécution de processus de régénération (71) effectue le processus de régénération selon la définition d'une période courte de mélange pauvre (Tb1) pendant laquelle un intervalle (Tl) entre les injections d'agent réducteur par le moyen d'alimentation en agent réducteur (54) au début de la période continue de mélange riche (Ta1) du processus de régénération est inférieur à une durée (Tr) d'injection de l'agent réducteur.

6. Appareil de purification d'échappement d'un moteur selon la revendication 5, **caractérisé en ce que**
le moyen d'exécution de processus de régénération (71) met fin à la période courte de mélange pauvre (Tb1) dès que le rapport air/carburant de l'échappement devient plus riche qu'un rapport air/carburant prédéterminé, qui a été défini à l'avance, pendant la période continue de mélange riche (Ta1) du processus de régénération.

7. Appareil de purification d'échappement d'un moteur selon la revendication 6, **caractérisé en ce que**
le moyen d'exécution de processus de régénération (71) effectue une régulation prédictive du moyen d'alimentation en agent réducteur (54) pendant la période courte de mélange pauvre (Tb1) et, dès que le rapport air/carburant de l'échappement devient plus riche que le rapport air/carburant prédéterminé et stable, effectue une régulation rétroactive du moyen d'alimentation en agent réducteur de façon à ce que le rapport air/carburant de l'échappement se rapproche d'un rapport air/carburant cible.

8. Appareil de purification d'échappement d'un moteur selon la revendication 7, **caractérisé en ce que**
le rapport air/carburant cible de l'échappement est défini sur la base d'une valeur maximale du rapport air/carburant de l'échappement, qui varie lors de l'alimentation en agent réducteur par intermittence par le moyen d'alimentation en agent réducteur (54).
